# EUROPÄISCHE PATENTANMELDUNG

(11) **EP 3 885 727 A1**
(43) Veröffentlichungstag der Anmeldung: **29.09.2021**
(21) Anmeldenummer: 21152656.1
(22) Anmeldetag: 21.01.2021
(51) Int. Cl.: G01L 1/12, G01L 3/10, G01M 5/00

(54) **SYSTEM ZUR DEHNUNGSERFASSUNG EINES ELASTOMEREN PRODUKTS**

(30) Priorität: 24.03.2020 DE 102020203812
(71) Anmelder: ContiTech Antriebssysteme GmbH, 30165 Hannover (DE)
(72) Erfinder: Sipilä, Pekka, 30419 Hannover (DE); Rosenbohm, Svenja, 30419 Hannover (DE); Fiss, Tim, 30419 Hannover (DE)
(74) Vertreter: Continental Corporation

(57) **Zusammenfassung**

Die vorliegende Erfindung betrifft ein System zur Dehnungserfassung eines elastomeren Produkts (1) mit dem elastomeren Produkt (1) mit einem Produktkörper (10), welcher zumindest im Wesentlichen ein elastomeres Material aufweist, wobei der Produktkörper (10) zumindest abschnittsweise wenigstens einen magnetostriktiven Körper (13) aufweist, und mit wenigstens einem Magnetfeldsensor (2, 3), welcher zum elastomeren Produkt (1) beabstandet und ausreichend nah zum magnetostriktiven Körper (13) des Produktkörpers (10) angeordnet sowie ausgebildet ist, ein Magnetfeld und/oder eine Änderung eines Magnetfeldes des magnetostriktiven Körpers (13) zu erfassen, wobei der magnetostriktive Körper (13) ausgebildet ist, seine Magnetisierung in Abhängigkeit einer Dehnung des Produktkörpers (10) in wenigstens einer Raumrichtung (X, Y, Z) zu ändern.

## Beschreibung

Die vorliegende Erfindung betrifft ein System zur Dehnungserfassung eines elastomeren Produkts gemäß des Patentanspruchs 1 sowie ein elastomeres Produkt zur Verwendung in einem derartigen System gemäß des Patentanspruchs 12.

Es sind zahlreiche technische Anwendungen bekannt, bei denen elastomere Produkte genutzt werden. Derartige Produkte können aus einem Elastomermaterial oder auch aus mehreren Elastomermaterialien bestehen bzw. ein Elastomermaterial oder auch mehrere Elastomermaterialien aufweisen. Unter einem Elastomermaterial bzw. unter einem elastomeren Material ist ein Elastomer als formfester, aber elastisch verformbarer Kunststoff zu verstehen, dessen Glasübergangspunkt sich unterhalb der Einsatztemperatur befindet. Insbesondere kann ein Elastomer ein Vulkanisat von Naturkautschuk oder von Silikonkautschuk sein und auch als Gummi bezeichnet werden. Beispielsweise können derartige elastomere Produkte Schläuche, Riemen und insbesondere Antriebsriemen, Bänder und insbesondere Förderbänder bzw. Gurte und insbesondere Fördergurte, Luftfedern, Fahrzeugreifen und dergleichen sein.

Um die Dehnung von Produkten allgemein zu erkennen, welche einer Krafteinwirkung in zumindest einer Richtung ausgesetzt sind, ist es z.B. bekannt, die akustische Entfernung, d.h. die Laufzeit eines Signals, zwischen zwei Messpunkten entlang der Richtung der Krafteinwirkung messtechnisch zu erfassen. Hierzu kann z.B. Ultraschall eingesetzt werden, indem an einer ersten Stelle des Produkts ein Ultraschallsignal erzeugt und an einer zweiten Stelle sensorisch erfasst wird. Üblicherweise werden zur Erzeugung von Ultraschallsignalen Piezokristalle verwendet, welche durch direkten oder indirekten Kontakt mit der Oberfläche des Produkts dort Schallwellen einkoppeln, welche sich zumindest auch durch das Produkt in der Richtung der Krafteinwirkung zum Sensor hin ausbreiten, wo sie ebenfalls mittels eines Piezokristalls erfasst werden können. Ist der Abstand zwischen den beiden Stellen von Ultraschallerzeuger und Ultraschallsensor hinreichend genau bekannt, kann durch wiederholte Messung durch eine Erhöhung der Signallaufzeit eine Dehnung in dieser Richtung messtechnisch erkannt werden.

Nachteilig ist hierbei, dass derartige Verfahren üblicherweise bei rein metallischen Körpern angewendet werden, welche ausreichend starr sind, um die Ausbreitung der Ultraschallwellen zu ermöglichen. Aufgrund seiner vergleichsweise hohen Elastizität, welche zu einer vergleichsweise hohen Absorption von Schallwellen, insbesondere bei hohen Frequenzen, allgemein führt, können derartige Verfahren jedoch nicht auf elastomere Produkte angewendet werden.

Nachteilig ist ferner, dass zur Übertragung der Ultraschallwellen von dem Ultraschallerzeuger in das Produkt hinein sowie der Ultraschallwellen zum Ultraschallsensor aus dem Produkt heraus jeweils ein berührender Kontakt erforderlich ist. Dieser berührende Kontakt kann direkt zwischen der Oberfläche des Produkts und dem Ultraschallerzeuger bzw. dem Ultraschallsensor erfolgen. Alternativ kann auch ein Koppelmittel wie z.B. Wasser, Öl, Gel oder dergleichen zwischen der Oberfläche des Produkts und dem Ultraschallerzeuger bzw. dem Ultraschallsensor vorgesehen werden. In jedem Fall verhindert diese Anforderung den Einsatz dieses Messverfahrens im Betrieb bei sich bewegenden Produkten wie z.B. Antriebsriemen, Förderbänder, Luftfedern und dergleichen.

Zur berührungslosen messtechnischen Erfassung von Dehnungen in Produkten und insbesondere in elastomeren Produkten sind optische Verfahren bekannt, um die Dehnung von Produkten allgemein in zumindest einer Richtung einer Krafteinwirkung messtechnisch zu erfassen. Hierzu können z.B. Referenzmarkierungen z.B. in Form von Streifen an wenigstens zwei Stellen entlang der Richtung der Krafteinwirkung außen auf dem Produkt aufgebracht werden, welche dann z.B. mittels einer Bildverarbeitungseinheit wie z.B. mittels einer Kamera optisch erfasst werden können. Ist der Abstand zwischen den beiden Referenzmarkierungen hinreichend genau bekannt, kann durch wiederholte Messung durch eine Erhöhung des Abstands eine Dehnung in dieser Richtung erfasst werden.

Nachteilig hierbei ist, dass derartige optische Verfahren durch Umwelteinflüsse wie z.B. Schmutz, Öl, Feuchtigkeit, Staub, Rauch und dergleichen ausreichend beeinträchtigt werden können, um zumindest eine der Referenzmarkierungen unzureichend oder sogar gar nicht mehr erkennen zu können. Dies kann die Ermittlung des Abstands verhindern. Auch können die Referenzmarkierungen lediglich dort an dem Produkt angeordnet werden, wo sie auch optisch erfasst werden können. Dies kann die Auswahl von geeigneten Stellen für die Referenzmarkierungen einschränken.

Ferner ist ein gewisser Abstand zwischen den Referenzmarkierungen erforderlich, um überhaupt Abstandsänderungen optisch erkennen zu können. Somit sind optische Verfahren lediglich bei vergleichsweise großen bzw. langen Produkten sinnvoll anwendbar.

Alternativ ist es bekannt, entsprechende Sensoren wie z.B. Dehnungsmesstreifen auf wenigstens eine Oberfläche des Produkts aufzubringen oder in das Material des Produkts in der Richtung einer Krafteinwirkung einzubringen. Dabei ist es jedoch erforderlich, eine Elektronik zum Aufwerten des Sensors ebenfalls an bzw. in dem Produkt anzuordnen und mit der Umgebung eine Kommunikation auszuführen, um die Sensordaten nach außerhalb des Produkts zur Verfügung stellen zu können. Dies kann z.B. mittels eines RFID-Chips (radio-frequency identification integrierter Schaltkreis) erfolgen. Auch kann elektrische Energie von außerhalb drahtlos in die Elektronik eingekoppelt werden, um diese samt Sensor zu betreiben.

Vergleichbar können SAW-Sensoren (surface acoustic wave) verwendet werden um akustische Oberflächenwellen zu erzeugen, welche sich als Körperschallwellen planar auf der Oberfläche des Produkts ausbreiten können. Dies kann ebenfalls mittels entsprechender Elektronik wie z.B. RFID-Chips drahtlos erfolgen. Dabei kann die Abhängigkeit der Oberflächenwellengeschwindigkeit von der mechanischen Spannung des Produkts genutzt werden, um auf die Dehnung zu schließen.

Nachteilig ist in diesen Fällen, dass derartige RF-Halbleiteranordnungen üblicherweise eine mechanisch schwache Verbindung zwischen Antenne, Sensor und integriertem Schaltkreis aufweisen, welche im Laufe der Anwendung unterbrochen werden und damit zum Ausfall des Sensors führen kann. Dies schränkt üblicherweise die Lebensdauer derartiger Sensoren deutlich ein.

Nachteilig ist ferner, dass derartige Sensoren mit integrierten Schaltkreisen üblicherweise eine vergleichsweise aufwendige und komplexe Lösung darstellen, welche zu entsprechend vergleichbar hohen Kosten hinsichtlich der elektronischen Bauteile sowie deren Verwendung bei dem Produkt, insbesondere bei dem elastomeren Produkt, im Rahmen dessen Herstellung führen kann. Dies kann die Anwendung derartiger Lösungen aus Kostengründen unattraktiv machen.

Nachteilig ist des Weiteren, dass es zwischen dem elastomeren Material des Produkts und dem Material des Sensors mit integriertem Schaltkreis zu chemischen Reaktionen aufgrund der Materialkombination kommen kann. Da dies die Verbindung zwischen den Materialien reduzieren und bzw. oder insbesondere den Sensor mit integriertem Schaltkreis angreifen kann, kann dies die Funktionsweise und bzw. oder die Lebensdauer des Sensors und bzw. oder dessen integrierten Schaltkreises beeinträchtigen und bzw. oder reduzieren. Dies kann auch zu einem Ausfall des Sensors und bzw. oder dessen integrierten Schaltkreises führen.

Um dies zu vermeiden, kann der Sensor mit integriertem Schaltkreis zusätzlich in ein schützendes bzw. trennendes Material eingebettet werden, was jedoch einen zusätzlichen Aufwand hinsichtlich Materialaufwand und bzw. oder Herstellungsaufwand darstellen kann. Dies kann zu entsprechend erhöhten Kosten führen.

Eine Aufgabe der vorliegenden Erfindung ist es, ein System zur Dehnungserfassung eines elastomeren Produkts der eingangs beschriebenen Art bereit zu stellen, so dass die Dehnung des elastomeren Produkts einfacher, verlässlicher, kompakter, robuster und bzw. oder kostengünstiger als bisher bekannt messtechnisch erfasst und bzw. oder überwacht werden kann. Zumindest soll eine Alternative zu den bisher bekannten Möglichkeiten geschaffen werden.

Die Aufgabe wird erfindungsgemäß durch ein System mit den Merkmalen gemäß Patentanspruch 1 sowie durch ein elastomeres Produkt mit den Merkmalen gemäß Patentanspruch 12 gelöst. Vorteilhafte Weiterbildungen sind in den Unteransprüchen beschrieben.

Somit betrifft die vorliegende Erfindung ein System zur Dehnungserfassung eines elastomeren Produkts mit dem elastomeren Produkt mit einem Produktkörper, welcher insbesondere ein Riemenkörper, ein Gurtkörper, ein Reifenkörper, ein Faltenbalg oder eine Schlauchwand sein kann und zumindest im Wesentlichen ein elastomeres Material wie z.B. Gummi, d.h. ein Vulkanisat von Natur- und bzw. oder Synthesekautschuk, aufweist. Der Produktkörper weist zumindest abschnittsweise wenigstens einen magnetostriktiven Körper auf, welcher teilweise bis vollständig auf und bzw. oder in dem Produktkörper angeordnet sein kann. Der magnetostriktive Körper kann z.B. als rein metallischer Körper, d.h. als ein vollmetallischer Körper, oder auch als Elastomerkörper umgesetzt werden, wie weiter unten noch näher beschrieben werden wird.

Das System weist ferner wenigstens einen Magnetfeldsensor auf, welcher zum elastomeren Produkt beabstandet und ausreichend nah zum magnetostriktiven Körper des Produktkörpers angeordnet sowie ausgebildet ist, ein Magnetfeld und bzw. oder eine Änderung eines Magnetfeldes des magnetostriktiven Körpers zu erfassen, wobei der magnetostriktive Körper ausgebildet ist, seine Magnetisierung in Abhängigkeit einer Dehnung des Produktkörpers in wenigstens einer Raumrichtung zu ändern.

Mit anderen Worten wird erfindungsgemäß wenigstens ein magnetostriktiver Körper derart an und bzw. oder in dem Produktkörper angeordnet, so dass auf den Produktkörper wirkende mechanische Spannungen an dieser Stelle eine entsprechende Längenänderung des magnetostriktiven Körpers verursachen können. Die Längenänderung des magnetostriktiven Körpers kann mittels des Villari-Effekts, auch inverse Magnetostriktion genannt, d.h. aufgrund einer Änderung der magnetischen Eigenschaften durch mechanische Beanspruchung, zu einer Veränderung der Magnetisierung bzw. der Permeabilität des magnetostriktiven Körpers führen, welche von außerhalb des elastomeren Produkts berührungslos mittels des Magnetfeldsensors erfasst werden kann. Dies kann die sensorische Erfassung und bzw. oder die messtechnische Bestimmung von Dehnung in dem Produktkörper ermöglichen.

Dies kann insbesondere vergleichsweise einfach, kostengünstig und bzw. oder kompakt und insbesondere ohne elektronische Elemente seitens des elastomeren Produkts erfolgen, da lediglich wenigstens ein entsprechend dimensionierter und angeordneter magnetostriktiver Körper an und bzw. oder in dem Produktkörper des elastomeren Produkts hierzu verwendet werden muss.

Gemäß einem Aspekt der Erfindung ist der magnetostriktive Körper ausgebildet, seine Magnetisierung in Abhängigkeit einer Dehnung des Produktkörpers in wenigstens zwei Raumrichtungen zu ändern. Hierdurch können Dehnungen in beiden Raumrichtungen sowie in dazwischenliegenden Raumrichtungen wenigstens zweidimensional sensorisch wie zuvor beschrieben erfasst werden.

Gemäß einem weiteren Aspekt der Erfindung ist der magnetostriktive Körper kreuzförmig ausgebildet. Dies kann die Erfassung von zwei senkrecht zueinander ausgerichteten Raumrichtungen bzw. den entsprechenden Dehnungen ermöglichen.

Gemäß einem weiteren Aspekt der Erfindung ist der magnetostriktive Körper ein ferromagnetischer Körper. Dies kann die Umsetzung vereinfachen.

Gemäß einem weiteren Aspekt der Erfindung ist der magnetostriktive Körper ein magnetostriktiver Elastomerkörper. Hierzu können beispielsweise metallische Materialien in das elastomere Material des Elastomerkörpers in einem ausreichend hohen Maße eingemischt werden, um die zuvor beschriebenen Aspekte der Erfindung umsetzen zu können. Gleichzeitig kann der magnetostriktiver Elastomerkörper eine vergleichbare Elastizität wie das elastomere Material des Produktkörpers aufweisen, um dessen Eigenschaften und insbesondere dessen Elastizität möglichst wenig bis gar nicht zu verändern.

Gemäß einem weiteren Aspekt der Erfindung weist der magnetostriktive Elastomerkörper in ein Elastomermaterial eingebettete ferromagnetische Partikel, insbesondere Mikropartikel, auf. Derartige Partikel können z.B. Eisen, Nickel, silicon steel (auch electrical steel bzw. Si-Fe genannt) und dergleichen enthalten bzw. hieraus bestehen. Dies kann die Umsetzung der ferromagnetischen Eigenschaften des magnetostriktiven Körpers ermöglichen. Die Verwendung von Partikeln und insbesondere die Verwendung von Mikropartikeln kann eine besonders gleichmäßige Verteilung der ferromagnetischen Elemente im magnetostriktiven Elastomerkörper bewirken, so dass auch der magnetostriktive bzw. der inverse magnetostriktive Effekt entsprechend gleichmäßig auftreten kann. Dies kann die sensorische Erfassung begünstigen.

Gemäß einem weiteren Aspekt der Erfindung ist der magnetostriktive Körper ein vollmetallischer Körper. Dies kann ebenfalls die Umsetzung der zuvor beschriebenen Eigenschaften ermöglichen. Dies kann ggfs. eine einfacher, schneller und bzw. kostengünstiger herzustellende Variante darstellen.

Gemäß einem weiteren Aspekt der Erfindung ist der Magnetfeldsensor ein aktiver Magnetfeldsensor. Beispielsweise kann der aktive Magnetfeldsensor ein induktiver Sensor sein, dessen Spule gleichstromdurchflossen betrieben werden kann, so dass eine Bewegung bzw. eine Dehnung des magnetostriktiven Körpers eine elektrische Spannungsänderung an der Spule hervorrufen kann. Diese Änderung der elektrischen Spannung kann sensorisch erfasst und hieraus das Maß der Dehnung des magnetostriktiven Körpers bestimmt werden.

Vorteilhaft kann hierbei sein, dass die sensorische Erfassung des Magnetfeldes und bzw. oder der Änderung des Magnetfeldes des magnetostriktiven Körpers mittels elektrischer Gleichspannung oder mittels eines langsam variierenden elektromagnetischen Felds erfolgen kann, so dass Verschmutzungen und andere Oberflächenverunreinigungen des Produktkörpers die sensorische Erfassung möglichst wenig bis gar nicht beeinflussen können. Auch müssen in diesem Fall Regularien und Begrenzungen von RF-Standards nicht beachtet werden.

Gemäß einem weiteren Aspekt der Erfindung ist der Magnetfeldsensor ein passiver Magnetfeldsensor. Beispielsweise kann hierzu ein Hall-Sensor oder ein GMR-Sensor (giant magnetoresistance sensor) verwendet werden. Dies kann den Aufwand der sensorischen Erfassung des Magnetfeldes und bzw. oder der Änderung des Magnetfeldes des magnetostriktiven Körpers geringhalten.

Gemäß einem weiteren Aspekt der Erfindung ist das System, vorzugsweise eine Steuerungseinheit des Systems, dazu ausgebildet, basierend wenigstens auf dem erfassten Magnetfeld und bzw. oder auf der erfassten Änderung des Magnetfeldes des magnetostriktiven Körpers eine Dehnung des Produktkörpers zu erkennen und bzw. oder zu bestimmen. Dies kann insbesondere über die Permeabilität bzw. dessen Veränderung erfolgen. Hierdurch kann das Auftreten von Dehnung bzw. Dehnungsänderung grundsätzlich erfasst und ggfs. quantitativ bestimmt werden.

Gemäß einem weiteren Aspekt der Erfindung ist der Magnetfeldsensor als stationäre Einrichtung oder als mobile Einrichtung ausgeführt. Als stationäre Einrichtung kann eine dauerhafte und insbesondere selbsttätige Umsetzung der Aspekte der Erfindung an dem elastomeren Produkt erfolgen. Als mobile Einrichtung kann dies bei Bedarf, insbesondere seitens einer Person, erfolgen, was die Kosten der Umsetzung der Erfindung reduzieren kann, da eine mobile Einrichtung flexibel bei mehreren elastomeren Produkten eingesetzt werden kann.

Die vorliegende Erfindung betrifft auch ein elastomeres Produkt zur Verwendung in einem System wie zuvor beschrieben. Hierdurch kann ein elastomeres Produkt zur Verfügung gestellt werden, um ein erfindungsgemäßes System umzusetzen und dessen Eigenschaften und Vorteile nutzen zu können.

In jedem Fall kann hinsichtlich der sensorisch erfassten Größe eine Lift-off-Korrektur mit typischen phasenabhängigen Methoden durchgeführt werden, die für Wirbelstrom-Sonden bekannt sind. In diesem Fall können die Modelle einfach eingestellt werden, um die niedrigere Leitfähigkeit des elastomeren Materials zu berücksichtigen. Bei magnetometer-basierter Methode kann für die Lift-off-Korrektur eine Streufeldamplitudenerkennung in Abhängigkeit vom Villari-Effekt angewendet werden.

Temperaturkorrekturen können durch Hinzufügen einer Sensorrichtung in stressneutraler Ausrichtung oder durch nicht berührende Temperatursensoren wie z.B. Infrarotrot oder herkömmliches PT100 an der Sondengehäusewand vorgenommen werden.

Mehrere Ausführungsbeispiele und weitere Vorteile der Erfindung werden nachstehend im Zusammenhang mit den folgenden Figuren erläutert. Darin zeigt:
- Fig. 1: einen schematischen Querschnitt durch einen Ausschnitt eines erfindungsgemäßen Systems gemäß eines ersten Ausführungsbeispiels;
- Fig. 2: einen schematischen Querschnitt durch einen Ausschnitt eines erfindungsgemäßen Systems gemäß eines zweiten Ausführungsbeispiels;
- Fig. 3: einen schematischen Querschnitt durch einen Ausschnitt eines erfindungsgemäßen Systems gemäß eines dritten Ausführungsbeispiels;
- Fig. 4: einen schematischen Querschnitt durch einen Ausschnitt eines erfindungsgemäßen Systems gemäß eines vierten Ausführungsbeispiels; und
- Fig. 5: einen schematischen Querschnitt durch einen Ausschnitt eines erfindungsgemäßen Systems gemäß eines fünften Ausführungsbeispiels.

Die Beschreibung der o.g. Figuren erfolgt in kartesischen Koordinaten mit einer Längsrichtung X, einer zur Längsrichtung X senkrecht ausgerichteten Querrichtung Y sowie einer sowohl zur Längsrichtung X als auch zur Querrichtung Y senkrecht ausgerichteten vertikalen Richtung Z. Die Längsrichtung X kann auch als Tiefe X, die Querrichtung Y auch als Breite Y und die vertikale Richtung Z auch als Höhe Z bezeichnet werden. Die Längsrichtung X, die Querrichtung Y und die vertikale Richtung Z können gemeinsam auch als Raumrichtungen X, Y, Z bzw. als kartesische Raumrichtungen X, Y, Z bezeichnet werden.

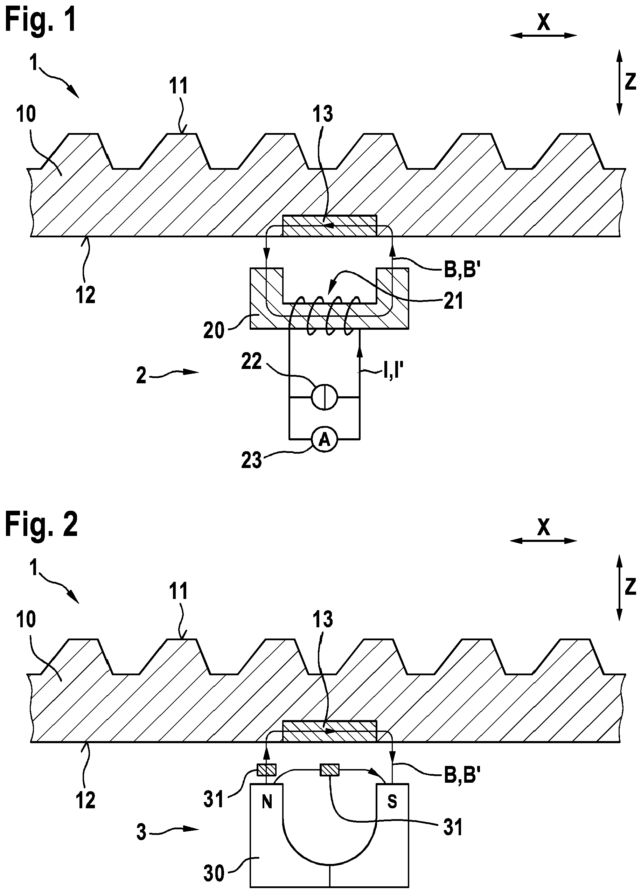

Fig. 1 zeigt einen schematischen Querschnitt durch einen Ausschnitt eines erfindungsgemäßen Systems gemäß eines ersten Ausführungsbeispiels.

Das erfindungsgemäße System gemäß dem ersten Ausführungsbeispiel der Fig. 1 weist ein elastomeres Produkt 1 auf, welches in diesem Fall z.B. ein endlos geschlossener Antriebsriemen 1 sein kann. Das elastomere Produkt 1 besteht im Wesentlichen aus einem Produktkörper 10 als Riemenkörper 10 aus einem elastomeren Material. Entlang der länglichen endlos geschlossenen Erstreckungsrichtung des Riemenkörpers 10 sind mehrere parallel zueinander in derselben Ebene verlaufende Festigkeitsträger (nicht dargestellt) z.B. in Form von Fasern wie insbesondere Glasfasern oder Corden wie insbesondere Aramidcorden in dem elastomeren Material eingebettet. Der Produktkörper 10 weist als Riemenkörper 10 eine Oberseite 11 in Form einer Profilierung 11 und gegenüberliegend eine Unterseite12 als Laufseite 12 auf. Dies ist bisher z.B. bei Antriebsriemen 1 bekannt.

Erfindungsgemäß weist der Produktkörper 10 einen magnetostriktiven und insbesondere einen ferromagnetischen Elastomerkörper 13 auf, dessen elastomeres Material mit magnetostriktiven bzw. ferromagnetischen Elemente, z.B. mit metallischen Partikeln und insbesondere mit metallischen Mikropartikeln, versetzt ist. Alternativ könnte auch ein magnetostriktiver und insbesondere ein ferromagnetischer vollmetallischer Körper 13 verwendet werden.

Erfindungsgemäß ist ferner ein Magnetfeldsensor 2 zur Erfassung eines Magnetfeldes und bzw. oder einer Änderung eines Magnetfeldes des magnetostriktiven Körpers 13 unmittelbar neben dem elastomeren Produkt 1 jedoch in einem berührungslosen Abstand angeordnet. Der Magnetfeldsensor 2 ist in diesem Fall als aktiver Magnetfeldsensor 2 ausgebildet und weist entsprechend einen U-förmigen Spulenkern 20 auf, dessen beiden offenen Enden senkrecht zur länglichen Erstreckung des Produktkörpers 10 und zu dessen Unterseite 12 hin ausgerichtet angeordnet sind. Der mittlere Bereich des Spulenkerns 20 wird von einer Induktionsspule 21 umgeben, welche von einer Stromquelle 22 mit einem elektrischen Gleichstrom I als elektrischer Erregerstrom I gespeist werden kann. Alternativ könnte auch ein Wechselstrom verwendet werden, insbesondere um phasenabhängige Messprinzipen verwenden zu können. Parallel zur Stromquelle 22 ist ein Strommesser 23 vorgesehen.

Wird nun der magnetostriktive Körper 13 entlang seiner länglichen Erstreckungsrichtung in der Längsrichtung X aufgrund von mechanischen Spannungen gedehnt, so bewirkt diese Längenänderung in der Längsrichtung X eine Veränderung der Magnetisierung bzw. der Permeabilität des magnetostriktiven Körpers 13. Diese veränderte Magnetisierung bzw. Permeabilität des magnetostriktiven Körpers 13 wirkt sich auf das resultierende Magnetfeld aus, welches gemeinsam von dem magnetostriktiven Körper 13 und dem aktiven Magnetfeldsensor 2 bewirkt wird, so dass die veränderte Magnetisierung bzw. Permeabilität des magnetostriktiven Körpers 13 über Sekundärinduktivitäten von dem aktiven Magnetfeldsensor 2 erfasst werden kann. Über entsprechende Auswertungen kann die Dehnung an sich erkannt und ggfs. auch dessen Maß bestimmt werden.

Mit anderen Worten kann von dem aktiven Magnetfeldsensor 2 mittels des elektrischen Gleichstroms I als elektrischer Erregerstrom I ein magnetischer Erregerfluss B durch den magnetostriktiven Körper 13 erzeugt und ein resultierender magnetischer Messfluss B' über den entsprechenden elektrischen Messstrom I' sensorisch erfasst werden.

Ein derartiges System kann sowohl stationär für ein zumindest im Wesentlichen fest positioniertes elastomeres Produkt 1 wie z.B. für eine Luftfeder 1 oder für einen Schlauch 1 eingesetzt werden, jedoch auch für ein sich bewegendes und insbesondere endlos umlaufendes elastomeres Produkt 1 wie z.B. den in der Fig. 1 betrachteten Antriebsriemen 1 aber auch für einen Aufzugsriemen 1, für einen Fördergurt 1 oder für einen Fahrzeugreifen 1.

Fig. 2 zeigt einen schematischen Querschnitt durch einen Ausschnitt eines erfindungsgemäßen Systems gemäß eines zweiten Ausführungsbeispiels. In diesem Fall wird ein passiver Magnetfeldsensor 3 verwendet, welcher einen U-förmigen Permanentmagneten 30 aufweist, welcher ein Magnetfeld durch den magnetostriktiven Körper 13 des elastomeren Produkts 1 hindurch erzeugt. Das Magnetfeld bzw. der magnetische Erregerfluss B sowie der magnetische Messfluss B' können dann durch Magnetfeldmesser 31 erfasst werden.

Dabei kann einmal der magnetische Erregerfluss B außerhalb und parallel zu dem magnetostriktiven Körper 13 und einmal der magnetische Messfluss B' durch den magnetostriktiven Körper 13 hindurch erfasst und aus der Differenz der magnetischen Flüsse B, B' auf die Dehnung geschlossen werden.

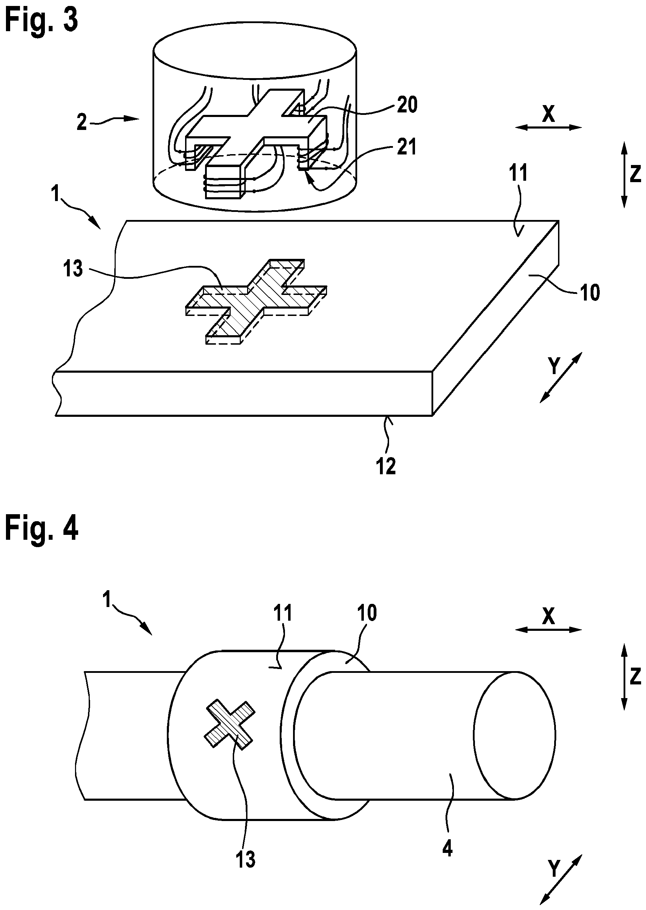

Fig. 3 zeigt einen schematischen Querschnitt durch einen Ausschnitt eines erfindungsgemäßen Systems gemäß eines dritten Ausführungsbeispiels. In diesem Fall ist der magnetostriktive Körper 13 kreuzförmig ausgebildet und der aktive Magnetfeldsensor 2 ist entsprechend ausgebildet und angeordnet, so dass Dehnungen in zwei orthogonal zueinander angeordnete Richtungen wie hier in die Längsrichtung X und in die Querrichtung Y wie zuvor beschrieben sensorisch erfasst werden können. Dies kann das Anwendungsspektrum erweitern.

Fig. 4 zeigt einen schematischen Querschnitt durch einen Ausschnitt eines erfindungsgemäßen Systems gemäß eines vierten Ausführungsbeispiels. In diesem Fall ist das elastomere Produkt 1 als Ring mit einem kreuzförmigen magnetostriktiven Körper 13 auf einen Körper 4 wie z.B. auf eine Welle 4 aufgebracht, um dessen Dehnung zu erfassen. Das elastomere Produkt 1 kann hierzu als Hülse 1 auf die äußere Oberfläche des Körpers 4 aufgebracht und insbesondere aufgeschrumpft sein, um eine feste und mechanische Spannung übertragende Verbindung herzustellen.

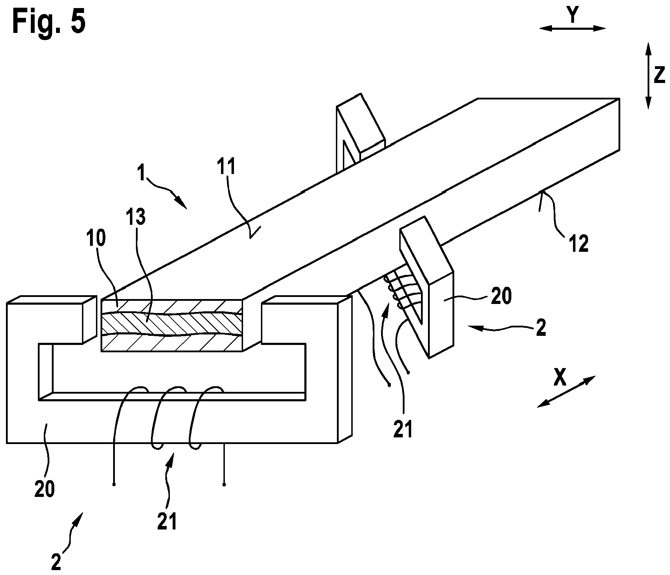

Fig. 5 zeigt einen schematischen Querschnitt durch einen Ausschnitt eines erfindungsgemäßen Systems gemäß eines fünften Ausführungsbeispiels. In diesem Fall ist der magnetostriktive Körper 13 als Schicht innerhalb des Produktkörpers 10 des elastomeren Produkts 1 als Fördergurt 1 ausgebildet und in der Höhe Z mittig zwischen einer oberen Deckplatte 11 als Oberseite 11 und einer unteren Deckplatte 12 als Unterseite 12 angeordnet. In der Querrichtung Y erstreckt sich der magnetostriktive Körper 13 als magnetostriktiver bzw. ferromagnetischer Elastomerkörper 13 über die gesamte Breite Y. In der Längsrichtung X erstreckt sich der magnetostriktive Körper 13 als magnetostriktiver bzw. ferromagnetischer Elastomerkörper 13 endlos geschlossen.

Auf diese Art und Weise kann während des Betriebs des Fördergurtes 1 mittels eines aktiven Magnetfeldsensors 2 direkt in der Querrichtung Y oder auch schräg in der Querrichtung Y und in der Längsrichtung X eine Dehnungserfassung erfolgen, wie zuvor beschrieben.

In jedem Fall kann, falls ein magnetostriktiver und insbesondere ein ferromagnetischer Elastomerkörper 13 verwendet wird, dieser in dem elastomeren Material des Produktkörpers 10 eingebettet sein. Dies kann die Anbindung des elastomeren Materials des ferromagnetischen Elastomerkörpers 13 zu dem elastomeren Material des Produktkörpers 10 verbessern. Auch kann der ferromagnetische Elastomerkörper 13 durch das umgebende elastomere Material des Produktkörpers 10 vor äußeren Einflüssen wie z.B. vor Feuchtigkeit geschützt werden, um z.B. Korrosion zu vermeiden.

Dies kann ebenso für einen magnetostriktiven und insbesondere für einen ferromagnetischen vollmetallischen Körper 13 gelten. Ein derartiger vollmetallischer Körper 13 kann hierzu auch in ein nicht-magnetisches Gehäuse (nicht dargestellt) eingebettet und samt dem Gehäuse in dem elastomeren Material des Produktkörpers 10 eingebettet sein. Dies kann chemische Wirkungen zwischen dem elastomeren Material des Produktkörpers 10 und dem Material des vollmetallischen Körpers 13 vermeiden.

### Bezugszeichenliste

### (Teil der Beschreibung)

- B: magnetischer Erregerfluss
- B': magnetischer Messfluss
- I: elektrischer Gleichstrom; elektrischer Erregerstrom
- I': elektrischer Messstrom

- X: Längsrichtung; Tiefe
- Y: Querrichtung; Breite
- Z: vertikale Richtung; Höhe

- 1: elastomeres Produkt; Antriebsriemen; Aufzugsriemen; Fördergurt; Fahrzeugreifen; Luftfeder; Schlauch; Hülse
- 10: Produktkörper; Riemenkörper; Gurtkörper; Reifenkörper; Faltenbalg; Schlauchwand
- 11: Oberseite; Profilierung; obere Deckplatte
- 12: Unterseite; Laufseite; untere Deckplatte
- 13: magnetostriktiver/ferromagnetischer (Elastomer-/vollmetallischer) Körper

- 2: aktiven Magnetfeldsensor
- 20: Spulenkern
- 21: Induktionsspule
- 22: Stromquelle
- 23: Strommesser

- 3: passiver Magnetfeldsensor
- 30: (Permanent-)Magnet
- 31: Magnetfeldmesser

- 4: Körper; Welle

## Patentansprüche

1. System zur Dehnungserfassung eines elastomeren Produkts (1) mit dem elastomeren Produkt (1)
mit einem Produktkörper (10), welcher zumindest im Wesentlichen ein elastomeres Material aufweist,
wobei der Produktkörper (10) zumindest abschnittsweise wenigstens einen magnetostriktiven Körper (13) aufweist, und
mit wenigstens einem Magnetfeldsensor (2, 3), welcher zum elastomeren Produkt (1) beabstandet und ausreichend nah zum magnetostriktiven Körper (13) des Produktkörpers (10) angeordnet sowie ausgebildet ist, ein Magnetfeld und/oder eine Änderung eines Magnetfeldes des magnetostriktiven Körpers (13) zu erfassen,
wobei der magnetostriktive Körper (13) ausgebildet ist, seine Magnetisierung in Abhängigkeit einer Dehnung des Produktkörpers (10) in wenigstens einer Raumrichtung (X, Y, Z) zu ändern.

2. System nach Anspruch 1, **dadurch gekennzeichnet, dass**
der magnetostriktive Körper (13) ausgebildet ist, seine Magnetisierung in Abhängigkeit einer Dehnung des Produktkörpers (10) in wenigstens zwei Raumrichtungen (X, Y, Z) zu ändern.

3. System nach Anspruch 2, **dadurch gekennzeichnet, dass**
der magnetostriktive Körper (13) kreuzförmig ausgebildet ist.

4. System nach einem der vorangehenden Ansprüche, **dadurch gekennzeichnet, dass** der magnetostriktive Körper (13) ein ferromagnetischer Körper (13) ist.

5. System nach einem der vorangehenden Ansprüche, **dadurch gekennzeichnet, dass** der magnetostriktive Körper (13) ein magnetostriktiver Elastomerkörper (13) ist.

6. System nach Anspruch 5, **dadurch gekennzeichnet, dass**
der magnetostriktiver Elastomerkörper (13) in ein Elastomermaterial eingebettete ferromagnetische Partikel, vorzugsweise Mikropartikel, aufweist.

7. System nach einem der Ansprüche 1 bis 4, **dadurch gekennzeichnet, dass** der magnetostriktive Körper (13) ein vollmetallischer Körper (13) ist.

8. System nach einem der vorangehenden Ansprüche, **dadurch gekennzeichnet, dass** der Magnetfeldsensor (2, 3) ein aktiver Magnetfeldsensor (2) ist.

9. System nach einem der Ansprüche 1 bis 7, **dadurch gekennzeichnet, dass** der Magnetfeldsensor (2, 3) ein passiver Magnetfeldsensor (3) ist.

10. System nach einem der vorangehenden Ansprüche, **dadurch gekennzeichnet, dass** das System, vorzugsweise eine Steuerungseinheit des Systems, dazu ausgebildet ist, basierend wenigstens auf dem erfassten Magnetfeld und/oder auf der erfassten Änderung des Magnetfeldes des magnetostriktiven Körpers (13) eine Dehnung des Produktkörpers (10) zu erkennen und/oder zu bestimmen.

11. System nach einem der vorangehenden Ansprüche, **dadurch gekennzeichnet, dass** der Magnetfeldsensor (2, 3) als stationäre Einrichtung oder als mobile Einrichtung ausgeführt ist.

12. Elastomeres Produkt (1) zur Verwendung in einem System nach einem der Ansprüche 1 bis 11.
